# EUROPÄISCHE PATENTSCHRIFT

(11) **EP 1 233 316 B1**
(45) Veröffentlichungstag und Bekanntmachung des Hinweises auf die Patenterteilung: **12.12.2007**
(21) Anmeldenummer: 02002898.1
(22) Anmeldetag: 08.02.2002
(51) Int. Cl.: G05B 19/05, G05B 19/042, G05B 19/418

(54) **Vorrichtung zum Bedienen von Automatisierungskomponenten**
Device for operating automatic control system components
Dispositif de manipulation des composants d'un système de commande automatique

(30) Priorität: 16.02.2001 DE 10107748; 20.06.2001 DE 10129567
(43) Veröffentlichungstag der Anmeldung: 21.08.2002
(73) Patentinhaber: SIEMENS AKTIENGESELLSCHAFT, 80333 München (DE)
(72) Erfinder: Kiesel, Martin, 91099 Poxdorf (DE); Polz, Andreas, 91056 Erlangen (DE); Wagner, Peter, 91217 Hersbruck (DE)

(56) Entgegenhaltungen:
- EP-A- 1 045 302
- EP-A- 1 164 756
- EP-A- 1 202 145
- WO-A-00/58799
- DE-A- 19 509 836
- DE-A- 19 853 013
- US-A- 6 167 464
- BERTELSEN O W ET AL: "Augmented reality as a design tool for mobile interfaces" DIS2000. DESIGNING INTERACTIVE SYSTEMS PROCESSES, PRACTICES, METHODS, AND TECHNIQUES. CONFERENCE PROCEEDINGS ACM NEW YORK, NY, USA, 19. August 2000 (2000-08-19), Seiten 185-192, XP002301244 ISBN: 1-58113-219-0

## Beschreibung

Die vorliegende Erfindung betrifft eine Vorrichtung zum Bedienen und/oder Beobachten von Automatisierungskomponenten mit einer Kommunikationseinrichtung zur Datenkommunikation mit den Automatisierungskomponenten insbesondere über Funk und einer Datenverarbeitungseinrichtung zur Verarbeitung der empfangenen und zu sendenden Daten.

Komplette Steuerungen werden in Engineeringsystemen projektiert und programmiert. In einzelnen Engineeringschritten werden Steuerungsgrößen parametriert und verknüpft. Die daraus entstehenden Projekte einschließlich der Programme, Konfigurationen, Bilder, Bedien- und Beobachtungsvariablen etc., werden in der Regel in der Automatisierungskomponente, d. h. in der Steuerung oder in dem Antrieb, hinterlegt.

Vielfach sind Bedien- bzw. HMI-Geräte (Human-Machine-Interface) vorgesehen, mit denen die Steuerungen anwenderfreundlich bedient werden können. Die HMI-Geräte dienen dabei zur Visualisierung und Einstellung von relevanten Steuerungsgrößen.

HMI-Geräte können fest mit der Steuerung verbunden oder aber auch mobil sein. Üblicherweise sind sie als proprietäre Geräte ausgeführt und werden vom Ersteller der Systemsoftware angeboten. Darüber hinaus werden aber auch beispielsweise Notebooks oder Standard-PCs als HMI-Geräte verwendet, die an das Datennetz angeschlossen werden, mit dem die Automatisierungskomponente verbunden ist.

Das US-Patent 6,167,464 offenbart ein mobiles HMI-Gerät, das Ortungssignale von Maschinen in einer Fabrik empfangen kann. Zugehörig zu den Ortungssignalen kann auf einer Ausgabeeinheit ein Steuerprogramm, welches zu der jeweiligen Maschine dazugehört, angezeigt werden. Das tragbare HMI-Gerät kann eine Benutzeridentifizierungseinheit umfassen. Das HMI-Gerät kann eine einfache Anzeigeeinrichtung sein oder ein tragbares Computerterminal.

Aus dem Artikel von O.W. Bertelsen et al."Augmented reality as a design tool for mobile interfaces" DIS2000: Designing Interactive Systems Processes, Practices, Methods, and Techniques. Conference Proceedings ACM New York, NY, USA, 19. August 2000 (ISBN:1-581 13-219-0), Seiten 185-192 ist bekannt, einen PDA (Personnel Digital Assistant) mit einem Strichcodelesegerät und einem Telefonmodem auszurüsten. In einer Automatisierungsumgebung wird an verschiedenen Geräten jeweils ein dem Gerät zugeordneter Strichcode eingelesen. Der PDA stellt eine Verbindung zu einem Prozesssteuersystem über Telefon her und tauscht mit diesem Daten über das betreffende Gerät aus.

Die DE 195 09 836 A1 offenbart ein Informationsendgerätesystem mit einem Prozesssteuercomputer und einer tragbaren Endgerätevorrichtung. Die tragbare Endgerätevorrichtung dient zum Eingeben von Informationen an den Prozesssteuercomputer und zum Gewinnen von Informationen von dem Prozesssteuercomputer. Sie weist eine Komponenteninformations-Speichereinrichtung zum Speichern von Informationen und zum Unterscheiden von jeder aus einer Vielzahl von Komponenten, aus denen eine Fabrik aufgebaut ist, auf. Ferner hat sie eine Komponentenidentifiziereinrichtung zum Identifizieren einer Komponente aus einer Vielzahl von Komponenten, welche sich in einer Richtung befindet, die durch die tragbare Endgerätevorrichtung angezeigt ist, und zwar durch Verwenden der Information zum Unterscheiden der Vielzahl von Komponenten. Bei einer Ausführungsform kann die tragbare Endgerätevorrichtung zum Abarbeiten eines vorbereiteten Algorithmus verwendet werden. Beim Transport der tragbaren Endgerätevorrichtung in der Fabrik kann jeweils die Entfernung zwischen der Vorrichtung (also der Bedienperson) und jeder Komponente berechnet werden. Dadurch kann eine angezeigte Komponente als die Komponente identifiziert werden, welche der Bedienperson am nächsten ist.

Darüber hinaus ist es bekannt, Handys als Störmelder für Automatisierungskomponenten einzusetzen. Dabei werden beispielsweise SMS-Kurznachrichten an den Besitzer des Handys geschickt, wenn ein Störfall vorliegt.

Die Aufgabe der vorliegenden Erfindung besteht darin, das Bedienen von Automatisierungskomponenten, insbesondere Steuerungen und Antriebe, durch mobile Bediengeräte komfortabler zu gestalten.

Erfindungsgemäß wird diese Aufgabe gelöst durch eine Vorrichtung zum Bedienen und/oder Beobachten von Automatisierungskomponenten mit einer Kommunikationseinrichtung zur Datenkommunikation mit den Automatisierungskomponenten insbesondere über Funk und einer Datenverarbeitungseinrichtung zur Verarbeitung der empfangenen und zu sendenden Daten, wobei die Vorrichtung ein Mobilfunktelefon ist, und wobei mit der Datenverarbeitungseinrichtung die von den Automatisierungskomponenten empfangenen Daten hinsichtlich der räumlichen Entfernung der jeweiligen Automatisierungskomponente von dem Standort der Vorrichtung auswertbar, so dass eine nächstgelegene Automatisierungskomponente erkennbar ist.

Bei einer bevorzugten Ausführungsform der Erfindung ist eine Autorisierungseinrichtung zum Erfassen von Bedieneridentifikationsinformation von einem Bediener zur Feststellung von dessen Autorisierung zur Bedienung der Automatisierungskomponenten vorgesehen.

Ferner sind bevorzugt mit der Datenverarbeitungseinrichtung Workflows für Inbetriebnahme, Umrüstung und/oder Service von den Automatisierungskomponenten und/oder einem externen Server abrufbar und/oder abarbeitbar.

Vorteilhafte Weiterbildungen der Erfindung ergeben sich aus den weiteren Unteransprüchen.

Besondere Vorteile der vorliegenden Erfindung bestehen darin, dass keine proprietären Einfach-HMI-Geräte mehr notwendig sind, sondern kommerziell verfügbare Mobilfunktelefone als Einfach-HMI-Geräte für Automatisierungskomponenten eingesetzt werden können. Mit derartigen Geräten kann in einer Anlage die nächste Station angezeigt, Workflows beispielsweise für das Maschinenumrüsten abgearbeitet und Zugriffsrechte für Bediener und Bediengeräte vergeben werden.

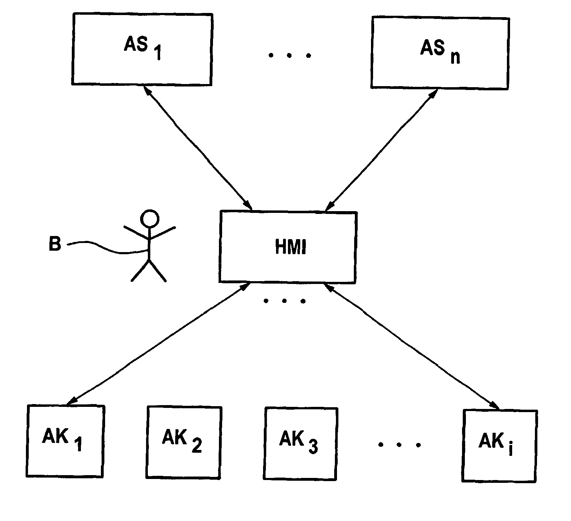

Die vorliegende Erfindung wird nun anhand der beigefügten Zeichnung näher erläutert, die den prinzipiellen Wirkungszusammenhang zwischen mobilem HMI-Gerät, Automatisierungskomponenten, zentralem Server und Bediener zeigt.

Das nachfolgend beschriebene Ausführungsbeispiel stellt eine bevorzugte Ausführungsform der vorliegenden Erfindung dar.

Die Figur zeigt den prinzipiellen Signalflussplan von Automatisierungskomponenten Aky₁, AK₂, AK₃, ... AKᵢ, die von einem HMI-Gerät HMI angesteuert werden. Ein Bediener B benutzt das HMI-Gerät, um die Automatisierungskomponenten in Betrieb zu nehmen, Einstellungen vorzunehmen, oder die Steuerungen zu warten. Das HMI-Gerät kann zusätzliche Informationen von einem oder mehreren Anlagenservern AS₁, ..., ASₙ beziehen. Der Anlagenserver kann als eigenständiger Server in dem HMI-Gerät oder in der Automatisierungskomponente liegen. Derartige Informationen wären beispielsweise Daten, Workflows oder Logfiles für die Protokollierung.

Im Rahmen dieser Beschreibung wird unter dem HMI-Gerät insbesondere ein Einfach-HMI zur Nutzung für beispielsweise folgende Funktionen verstanden:
a) Inbetriebnahme-Funktionen:
   Die Inbetriebnahme der Steuerung oder des Antriebs erfordert die prinzipielle Einstellung und Anpassung eines Steuerungsprogramms für/an die Maschine. Die weitere Funktion der Applikationsinbetriebnahme erfordert maschinenspezifische Einstellungen bzw. Adaptionen an die jeweilige Maschine, worunter auch die Einstellung technologischer Größen fällt.
b) Produktionsbetrieb:
   Während des Produktionsbetriebs ist die Rezepturverwaltung und ggf. ein Rezepturwechsel notwendig. Hierzu ist beispielsweise das Produkt, die Stückzahl, der Produktionstakt und weitere Produkteigenschaften einzustellen. Ferner sollte während des Produktionsbetriebs ein Formatwechsel möglich sein, mit dem Einstellungen von Maschinengrößen, die für den Auftrag relevant sind, flexibel gestaltet werden können. Eine außerordentlich wichtige Funktion während des laufenden Betriebs ist die optische bzw. graphische Darstellung von Qualitätsdaten oder Produktionsdaten zur Überwachung.
c) Servicefall:
   Im Falle einer Störung sollte auch das Einfach-HMI in der Lage sein, in einem gewissen Maß Servicedaten anzuzeigen, damit die Störungen, ohne tief in das Runtimesystem einer Automatisierungskomponente einsteigen zu müssen, zielgerichtet behoben werden können.

Das Einfach-HMI ist vorteilhafterweise mobil. Dies setzt eine Funkverbindung oder eine Kabelverbindung beispielsweise zu einem Intranet voraus. Ein derartiges mobiles HMI-Gerät stellt beispielsweise ein Notebook dar, das an das Intranet einer Anlage angeschlossen wird. Hierzu können beispielsweise Plug & Play-Kabelverbindungen zwischen dem mobilen Gerät und der Automatisierungskomponente verwendet werden.

Alternativ kann die Verbindung zwischen Einfach-HMI und Automatisierungskomponente über Funk aufgebaut werden. In diesem Zusammenhang ist auch eine Funkverbindung denkbar zu einer Station, die über eine Kommunikationsschnittstelle mit einer oder mehreren Automatisierungskomponenten verbunden ist. Leistungsfähige Telekommunikationsanlagen, z. B. UMTS-Systeme zur Übertragung von Multimedianachrichten, sind besonders geeignet, um eine hohe Funktionalität des Einfach-HMIs bereitzustellen. In die Automatisierungskomponente kann Serverfunktionalität integriert werden. So kann die Automatisierungskomponente beispielsweise als Webserver oder UMTS-Server dienen. Darüber hinaus kann ein überlagerter Webserver für mehrere Automatisierungskomponenten eingesetzt werden.

Das Einfach-HMI-Gerät kann erfindungsgemäß ein Mobilfunktelefon bzw. Handy sein. Mit dem Mobilfunktelefon lässt sich die Automatisierungskomponente anwählen und automatisch eine Verbindung aufbauen. Im UMTS-Betrieb können so komplexe Multimedianachrichten ausgetauscht werden.

Falls eine Anlage mehrere Steuerungen und Antriebe umfasst, ist es für das Servicepersonal unter Umständen sehr aufwendig, sich in eine bestimmte Automatisierungskomponente einzuwählen. Daher werden dem Nutzer alle für ihn relevanten Automatisierungskomponenten auf der Anzeige des Mobilfunktelefons durch Symbole, Kurzbegriffe oder -nummern symbolisiert. Der Benutzer kann dann in die auf dem Handy visualisierte Automatisierungskomponente browsen, sofern ein geeigneter Browser in das Handy geladen wurde.

Die Visualisierung der relevanten Automatisierungskomponenten kann dahingehend verfeinert werden, dass dem Bediener auf dem Handy die räumlich nächstgelegene Automatisierungskomponente auf dem Handy bzw. Mobil Device graphisch angezeigt wird. Dies kann beispielsweise dadurch erfolgen, dass das Symbol der nächstgelegenen Automatisierungskomponente größer, blinkend oder andersfarbig dargestellt wird. Das Messen der räumlichen Entfernung zwischen der Automatisierungskomponente und dem Handy bzw. mobilen HMI-Gerät kann durch ein GPS-System, Laufzeitbestimmung oder Signalschwächung erfolgen. Der Vorteil der Bestimmung der nächstgelegenen Automatisierungskomponente liegt darin, dass beispielsweise ein Servicemann sofort erkennen kann, vor welcher der angezeigten Automatisierungskomponenten er sich befindet.

Eine Ausführungsform der vorliegenden Erfindung ermöglicht die Unterstützung der Funktionen bei Inbetriebnahme, Produktionsbetrieb und Servicefall durch ein Workflow-Management. Dadurch werden zwischen dem Einfach-HMI und der Automatisierungskomponente Funktionen halbautomatisch oder automatisch ausgeführt. Ein Fall einer automatischen Workflowsteuerung wäre eine Applikationsinbetriebnahme von mehreren gleichartigen Automatisierungskomponenten, wobei die maschinenspezifischen Einstellungen beispielsweise per Knopfdruck erfolgen.

Ein Beispiel einer halbautomatischen Workflow-Steuerung wäre das Umrüsten für eine neue Maschine oder einen neuen Auftrag. In beiden Fällen würde der Bediener angeleitet werden, sich die einschlägigen Daten von einem speziell vorgesehen Server herunterzuladen und entsprechend vorgegebener Anweisungen in der Maschine zu installieren.

Der Einsatz von Workflows eignet sich auch für den Servicefall, wenn beispielsweise vordefinierte Serviceroutinen zu durchlaufen sind.

Der Workflow kann durch die Automatisierungskomponente, d. h. durch die Steuerung oder den Antrieb bzw. in der Maschine oder durch einen weiteren Server vorgegeben werden.

Eine weitere erfindungsgemäße Ausführungsform besteht darin, an dem mobilen HMI-Gerät personenspezifische Einstellungen vorzunehmen. In diesem Zusammenhang können Zugriffsrechte an der Steuerung zur Erhöhung der Sicherheit vergeben werden. Eine Variante besteht darin, die Rechte an das Bediengerät zu koppeln, wobei die Zugangsrechte zu der Maschine über das Einfach-HMI-Gerät gesteuert werden. Dabei kann das HMI-Gerät mit der Automatisierungskomponente beispielsweise im Handshake-Verfahren Zugangscodes austauschen und somit die Autorisierung des Bediengeräts feststellen. Die Überprüfung der Zugangsrechte kann auch durch einen Workflow gesteuert sein.

Wenn sich der Bediener gegenüber dem HMI-Gerät beispielsweise durch eine PIN-Nummer kenntlich macht, kann das HMI-Gerät hieraus Benutzerrechte ableiten. Dementsprechend kann kontrolliert werden, welcher Benutzer welche Änderungen an der Steuerung vornehmen darf. Darüber hinaus kann, wenn das HMI-Gerät den Benutzer erkannt hat, eine personenspezifische Defaulteinstellung im User-Interface vorgenommen werden.

Erfindungsgemäß zeichnet sich ein mobiles HMI-Gerät durch eine oder mehrere der folgenden Eigenschaften aus:
- das Gerät kann über Funk- oder Kabelverbindung (z. B. Ethernet) an Automatisierungskomponente gekoppelt werden;
- das Gerät hat optional Verbindung zu weiteren Servern;
- das Gerät enthält Mechanismen zur Geräteidentifikation;
- das Gerät enthält Mechanismen zur Benutzeridentifikation;

Zusammenfassend stellt ein erfindungsgemäßes mobiles HMI-Gerät folgende Funktionen bereit:
- Inbetriebnahme-Funktionen für die Automatisierungskomponente;
- Inbetriebnahme der Steuerung oder des Antriebs;
- Applikationsinbetriebnahme (maschinenspezifische Einstellungen bzw. Adaption an jeweilige Maschine);
- Nutzung im Produktionsbetrieb der Maschine;
- Rezepturverwaltung und Rezepturwechsel (Auftragsdaten: Stückzahl, Qualität, weitere Produkteigenschaften);
- Formatwechsel (Einstellung von Maschinengrößen, die für den Auftrag relevant sind);
- Darstellung von Qualitätsdaten oder Produktionsdaten;
- Servicefall;
- Serviceanzeigen;
- Workflowmanagement für Inbetriebnahme, Produktionsbetrieb (Rezepturverwaltung) und Service.

Die Maschinen- bzw. die Applikationsinbetriebnahme und/oder die Maschinenumrüstung und/oder Service kann durch geführte Bedienung mit Workflows erfolgen. Dabei sind folgende Schritte und Merkmale denkbar:
- die Steuerung ruft im Produktionsbetrieb Umrüster an (ich brauche neue Daten) - Workflow Maschine;
- der Workflow ist auf der Steuerung oder auf dem externen Server hinterlegt;
- die Steuerung oder der Maschinenbediener ruft den Workflow ab;
- der Maschinenbediener führt eine Tätigkeit gemäß dem Workflow aus;
- der Maschinenbediener steuert/bearbeitet den Workflow durch entsprechende Quittierungen;
- der abgearbeitete Workflow kann protokolliert werden (Steuerung-/Server).

Die erfindungsgemäße Identifikation und Visualisierung von Automatisierungskomponenten in einer industriellen Anlage umfasst zusammenfassend einen oder mehrere der folgenden Schritte:
- automatischer Verbindungsaufbau zwischen Automatisierungskomponente und mobilem Gerät;
- Visualisierung der räumlich nächstgelegenen Automatisierungskomponenten auf dem mobilen Gerät - Visualisierung kann durch ein graphisches Symbol oder Text erfolgen;
- Visualisierung der für einen Nutzer relevanten Automatisierungskomponenten (z. B. für einen Servicemann in einer Anlage);
- Browsen in die auf dem Handy visualisierte Automatisierungskomponente.

In vorteilhafter Weise wird die autorisierte Bedienung von Automatisierungskomponenten durch einen oder mehreren der folgenden Schritte sichergestellt:
- Personalisierung von mobilen HMI-Geräten (Bindung von Bedienrechten an Gerät);
- das Gerät erkennt den Benutzer (Benutzeridentifikation durch Gerät), z. B. Passwort, Dongle, Memory-Card wie MMC-Card, Fingerabdruck;
- das Gerät hat Zugang/Zugriff auf die Steuerung und optional auf einen externen Server

In jedem Fall erweist sich die Nutzung der allgemein verfügbaren IT-Geräte, z. B. PDA, Handys, PalmTops, etc. oder sonstiger mobiler IT-Geräte als Einfach-HMI für Automatisierungskomponenten wie Steuerungen und Antriebe als vorteilhaft.

## Patentansprüche

1. Mobilfunktelefon zum Bedienen und/oder Beobachten von Automatisierungskomponenten mit
einer Kommunikationseinrichtung zur Datenkommunikation mit den Automatisierungskomponenten insbesondere über Funk und
einer Datenverarbeitungseinrichtung zur Verarbeitung der empfangenen und zu sendenden Daten,
**dadurch gekennzeichnet, dass**
mit der Datenverarbeitungseinrichtung die von den Automatisierungskomponenten empfangenen Daten hinsichtlich der räumlichen Entfernung der jeweiligen Automatisierungskomponente von dem Standort des Mobilfunktelefons ausgewertet sind, so dass eine nächstgelegene Automatisierungskomponente erkannt ist.

2. Mobilfunktelefon nach Anspruch 1, mit einer Visualisierungseinrichtung zur Visualisierung von Automatisierungskomponenten, die mit dem Mobilfunktelefon in Datenkommunikation stehen, mit den Automatisierungskomponenten jeweils eindeutig zugeordneten Symbolen oder Texten.

3. Mobilfunktelefon nach Anspruch 1 oder 2, wobei die nächstgelegene Automatisierungskomponente durch vorbestimmte Symbolik oder Hervorhebung visualisierbar ist.

4. Mobilfunktelefon nach einem der Ansprüche 1 bis 3, wobei mit der Kommunikations- und Datenverarbeitungseinrichtung Multimedianachrichten verarbeitbar und übertragbar sind.

5. Mobilfunktelefon nach einem der vorhergehenden Ansprüche, **gekennzeichnet durch** eine Autorisierungseinrichtung zum Erfassen von Bedieneridentifikationsinformation von einem Bediener zur Feststellung von dessen Autorisierung zur Bedienung der Automatisierungskomponenten.

6. Mobilfunktelefon nach einem der vorhergehenden Ansprüche, wobei mit der Autorisierungseinrichtung Bediengerätidentifikationsinformation an die Automatisierungskomponenten und/oder an externe Server versendbar ist, so dass die Automatisierungskomponenten und/oder die externen Server die Autorisierung der Vorrichtung zum Bedienen prüfen können.

7. Mobilfunktelefon nach Anspruch 5 oder 6, wobei die Bedieneridentifikationsinformation aus einem Passwort, einer PIN, einem Dongle, einer Memory-Card und/oder einem Fingerabdruck erfassbar ist.

8. Mobilfunktelefon nach einem der vorhergehenden Ansprüche, **dadurch gekennzeichnet, dass** mit der Datenverarbeitungseinrichtung Workflows für Inbetriebnahme, Umrüstung und/oder Service von den Automatisierungskomponenten und/oder einem externen Server abrufbar und/oder abarbeitbar sind.

9. Mobilfunktelefon nach Anspruch 8 mit einer Anzeigeeinrichtung zur optischen Führung eines Bedieners bei der Abarbeitung eines Workflows.

10. Mobilfunktelefon nach Anspruch 8 oder 9 mit einer Ein/Ausgabeeinrichtung zur Steuerung und/oder Bearbeitung eines Workflows durch den Bediener.

## Claims

1. Mobile radio telephone for operating and/or observing automation components, having a communication device for data communication with the automation components, in particular via radio, and a data processing device for processing the data received and to be transmitted, **characterized in that** the data processing device is used to evaluate the data received from the automation components with regard to the spatial distance of the respective automation component from the location of the mobile radio telephone such that a nearest automation component is detected.

2. Mobile radio telephone according to Claim 1, having a visualization device for visualizing automation components, which are in data communication with the mobile radio telephone, with the aid of symbols or texts uniquely assigned to the automation components.

3. Mobile radio telephone according to Claim 1 or 2, in which the nearest automation component can be visualized by predetermined symbols or highlighting.

4. Mobile radio telephone according to one of Claims 1 to 3, in which multimedia messages can be processed and transmitted with the aid of the communication and data processing device.

5. Mobile radio telephone according to one of the preceding claims, **characterized by** an authorization device for acquiring operator identification information from an operator for the purpose of establishing the authorization of the latter to operate the automation components.

6. Mobile radio telephone according to one of the preceding claims, in which the authorization device can send operator unit identification information to the automation components and/or to external servers such that the automation components and/or the external servers can check the authorization of the mobile radio telephone to operate.

7. Mobile radio telephone according to Claim 5 or 6, in which the operator identification information can be acquired from a password, a PIN, a dongle, a memory card and/or a fingerprint.

8. Mobile radio telephone according to one of the preceding claims, **characterized in that** the data processing device can be used to call up and/or process workflows for commissioning, converting and/or servicing the automation components and/or an external server.

9. Mobile radio telephone according to Claim 8 having a display device for optically guiding an operator when processing a workflow.

10. Mobile radio telephone according to Claim 8 or 9 having an input/output device for controlling and/or processing a workflow by the operator.

## Revendications

1. Téléphone mobile pour la commande et/ou l'observation de composants d'automatisation, comportant
un dispositif de communication pour la communication de données avec les composants d'automatisation notamment par radio, et
un dispositif de traitement de donnés pour le traitement des données reçues et à émettre,
**caractérisé par le fait que**, avec le dispositif de traitement de données, les données reçues par les composants d'automatisation sont évaluées pour connaître la distance spatiale entre le composant d'automatisation respectif et la position du téléphone mobile de manière à détecter le plus proche composant d'automatisation.

2. Téléphone mobile selon la revendication 1, comportant un dispositif de visualisation pour la visualisation de composants d'automatisation qui sont en communication de données avec le téléphone mobile, comportant des symboles ou textes associés à chaque fois sans équivoque aux composants d'automatisation.

3. Téléphone mobile selon la revendication 1 ou 2, le plus proche composant d'automatisation étant visualisable par une symbolique ou une accentuation prédéterminée.

4. Téléphone mobile selon l'une des revendications 1 à 3, des messages multimédia pouvant être traités et transmis avec le dispositif de communication et avec le dispositif de traitement de données.

5. Téléphone mobile selon l'une des revendications précédentes, **caractérisé par** un dispositif d'autorisation pour l'acquisition d'une information d'identification d'un utilisateur afin de connaître les autorisations de celui-ci concernant la commande des composants d'automatisation.

6. Téléphone mobile selon l'une des revendications précédentes, une information d'identification d'appareil de commande pouvant être envoyée aux composants d'automatisation et/ou aux serveurs externes avec le dispositif d'autorisation de telle sorte que les composants d'automatisation et/ou les serveurs externes peuvent vérifier les autorisations du dispositif concernant la commande.

7. Téléphone mobile selon la revendication 5 ou 6, l'information d'identification d'utilisateur pouvant être acquise à partir d'un mot de passe, d'un PIN, d'une clé du type dongle, d'une carte de mémoire du type Memory-Card et/ou d'une empreinte digitale.

8. Téléphone mobile selon l'une des revendications précédentes, **caractérisé par le fait que**, avec le dispositif de traitement de données, des programmes de travail destinés à la mise en service, à l'adaptation et/ou à la maintenance peuvent être appelés et/ou exécutés par les composants d'automatisation et/ou par un serveur externe.

9. Téléphone mobile selon la revendication 8 comportant un dispositif d'affichage pour guider optiquement un utilisateur lors de l'exécution d'un programme de travail.

10. Téléphone mobile selon la revendication 8 ou 9 comportant un dispositif d'entrée / sortie pour la commande et/ou le traitement d'un programme de travail par l'utilisateur.
